# EUROPEAN PATENT APPLICATION

(11) **EP 4 730 300 A1**
(43) Date of publication of application: **22.04.2026**
(21) Application number: 25203682.7
(22) Date of filing: 22.09.2025
(51) Int. Cl.: G08G 5/21, G01C 23/00, G08G 5/23, G08G 5/265, G08G 5/51, G08G 5/55

(54) **SYSTEM AND METHOD FOR DISPLAYING TAXI GUIDANCE INFORMATION ON AN AIRPORT CHART**

(30) Priority: 15.10.2024 US 202463707374 P; 08.07.2025 US 202519262317
(71) Applicant: Honeywell International Inc., Charlotte, NC 28202 (US)
(72) Inventor: HE, Gang, Charlotte, 28202 (US); QIN, Zhihao, Charlotte, 28202 (US)
(74) Representative: Ingrassia, Fisher & Lorenz UK Ltd.

(57) **Abstract**

A system and method for displaying taxi guidance information includes receiving, in a processing system, taxi guidance data representative of taxi guidance information for a specific airport. Airport moving map (AMM) data for the specific airport is retrieved, via the processing system, from an AMM data source, and chart data for the specific airport is retrieved, via the processing system, from an airport chart data source. The processing system commands a display device to render an image representative of a published airport chart for the specific airport overlaid onto an airport moving map for the specific airport and with a taxi path that corresponds to the taxi guidance information overlaid onto the airport chart for the specific airport.

## Description

### CROSS REFERENCE TO RELATED APPLICATION

The present application claims the benefit of prior filed U.S. Provisional Patent Application No. 63/707,374, filed October 15, 2024, which is hereby incorporated by reference herein in its entirety.

### TECHNICAL FIELD

The present disclosure relates to displaying taxi guidance information and, more particularly, to a system and method for displaying taxi guidance information on an airport chart.

### BACKGROUND

When taxi clearance information is supplied to an aircraft from, for example, air traffic control, the pilot can enter the clearance information into an airport moving map system. The airport moving map system may then generate and render the taxi path, corresponding to the clearance information, onto the airport moving map that corresponds to the airport. This can provide improved situational awareness to the pilot during taxiing operations. However, this also can present certain drawbacks.

For example, at times, the airport moving map data may not accurately reflect what is shown on published airport charts. In particular, published airport charts typically include more information regarding operations within the airport environment than what is provided by airport moving maps. This can, in some instances, lead to mismatches in what is shown on the airport moving map and what is shown in the corresponding airport chart. This, in turn, can lead to an inaccurate and unwanted taxi path being rendered onto the airport moving map. Thus, pilots are required to compare the airport moving map and the corresponding airport chart to ensure the airport moving map is accurate. This can create extra workload, since these two systems are separately implemented.

Hence, there is a need for a system and method of integrating the airport moving map and airport chart systems so that a pilot can quickly determine if the taxi path that is rendered on the airport moving map can be used for taxi operations, based on the data and information that is reflected in the corresponding airport chart. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a system for displaying taxi guidance information on an airport chart includes a display device, an airport moving map (AMM) data source, an airport chart data source, and a processing system. The display device is configured, in response to image rendering display commands, to render one or more images. The AMM data source is configured to supply AMM data that is indicative of geometries of various airport features. The airport chart data source is configured to supply chart data indicative of airport charts. The processing system is in operable communication with the AMM data source, the airport chart data source, and the display device. The processing system is adapted to receive taxi guidance data representative of taxi guidance information for a specific airport, and is configured, at least in response to an input command, to: (i) retrieve AMM data for the specific airport from the AMM data source and chart data for the specific airport from the airport chart data source, and (ii) command the display device to render an image representative of a published airport chart for the specific airport overlaid onto an airport moving map for the specific airport and with a taxi path that corresponds to the taxi guidance information overlaid onto the airport chart for the specific airport.

In another embodiment, taxi guidance information system includes a processing system that is adapted to receive taxi guidance data representative of taxi guidance information for a specific airport. The processing system is configured, at least in response to an input command, to: (i) retrieve airport moving map (AMM) data for the specific airport from an AMM data source and chart data for the specific airport from an airport chart data source, and (ii) command a display device to render an image representative of a published airport chart for the specific airport overlaid onto an airport moving map for the specific airport and with a taxi path that corresponds to the taxi guidance information overlaid onto the airport chart for the specific airport.

In yet another embodiment, a method for displaying taxi guidance information includes receiving, in a processing system, taxi guidance data representative of taxi guidance information for a specific airport. Airport moving map (AMM) data for the specific airport is retrieved, via the processing system, from an AMM data source, and chart data for the specific airport is retrieved, via the processing system, from an airport chart data source. The processing system commands a display device to render an image representative of a published airport chart for the specific airport overlaid onto an airport moving map for the specific airport and with a taxi path that corresponds to the taxi guidance information overlaid onto the airport chart for the specific airport.

The system integrates the airport moving map and airport chart systems so that a pilot can quickly determine if the taxi path that is rendered on the airport moving map can be implemented, based on the data that is reflected in the corresponding airport chart. Furthermore, other desirable features and characteristics of the system will become apparent from the subsequent detailed description, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 a functional block diagram of one embodiment of a system for displaying taxi guidance information;
FIGS.2-6 depict various images that may be rendered on a display device of the system of FIG. 1; and
FIG. 7 depicts a method, in flowchart form, that may be implemented in the system of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

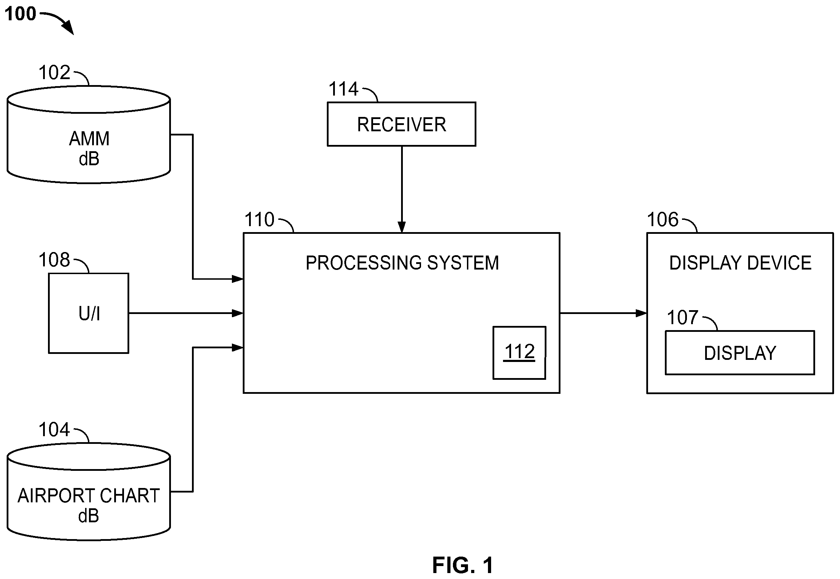

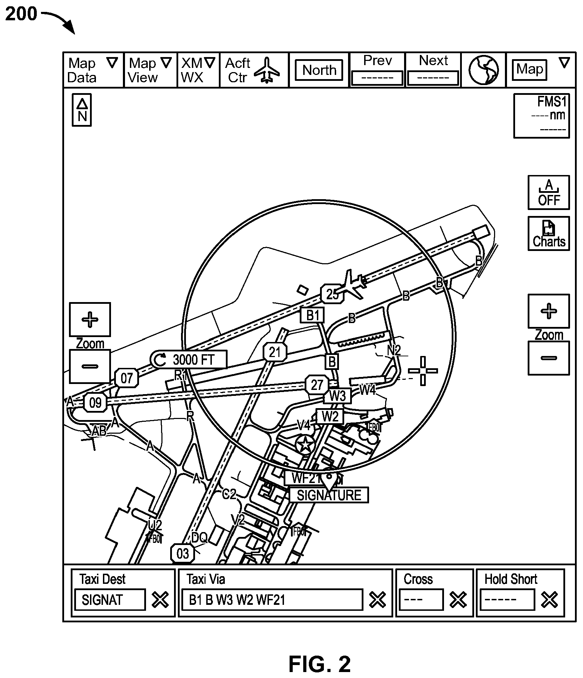

Referring to FIG. 1, a functional block diagram of one embodiment of a system for displaying taxi guidance information is depicted. The depicted system 100, includes an airport moving map (AMM) database 102, an airport chart database 104, a display device 106, a user interface 108, and a processing system 110. The AMM database 102, as is generally known, stores AMM data indicative of the geometry of various airport features such as runways, taxiways, and buildings, and may, in some instances, include various functional information. The AMM data, as is also generally known and will be briefly described, can be processed to render an image of a selected airport. In some embodiment, aircraft data can also be processed to also display at least ownship aircraft position and movement at the selected airport. One example of a rendered image of an airport moving map 200 is depicted in FIG. 2.

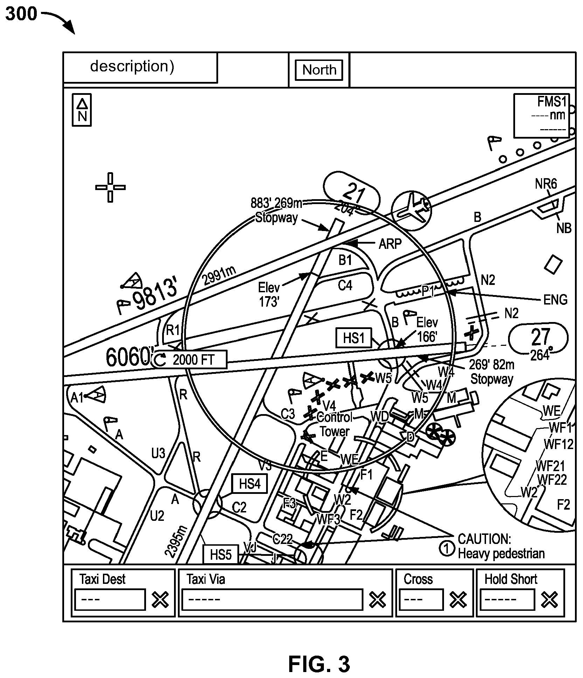

The airport chart database 104, as is also generally known, stores chart data indicative airport charts that are published by various regulatory authorities. The chart data can be processed to render an image of the published airport chart associated with a selected airport. One example of a rendered image of a published airport chart 300 is depicted in FIG. 3. It should be noted that the airport chart depicted in FIG. 3 corresponds to the same airport that is rendered using the AMM data.

The display device 106 may include any number and type of image generating devices on which one or more avionic displays 107 may be produced. In various embodiments, the display device 106 may be affixed to a static structure of an aircraft cockpit as, for example, a Head Down Display (HDD) or Head Up Display (HUD) unit. Alternatively, the display device 106 may be implemented using a movable display device (e.g., a pilot-worn display device) or a portable display device, such as an Electronic Flight Bag (EFB), a laptop, or a tablet computer carried into the aircraft cockpit by a pilot.

At least one avionic display 107 is generated on the display device 106 during operation of the system 100 and, as will be described below, in response to image rendering display commands supplied from the processing system 110. The term "avionic display" as used herein is synonymous with the terms "aircraft-related display" and "cockpit display" and encompasses displays generated in textual, graphical, cartographical, and other formats. The system 100 can generate various types of lateral and vertical avionic displays 107 on which symbology, text annunciations, and other graphics pertaining to flight planning are presented for a pilot to view. The display device 106 may be configured to continuously render at least one avionic display 107 generated and controlled by the system 100 can include alphanumerical input displays of the type commonly presented on the screens of multi-function control and display units (MCDUs), as well as Control Display Units (CDUs) generally. Specifically, certain embodiments of the avionic display 107 includes one or more two-dimensional (2D) avionic displays, such as a horizontal (i.e., lateral) navigation display or vertical navigation display; and/or on one or more three dimensional (3D) avionic displays, such as a Primary Flight Display (PFD) or an exocentric 3D avionic display.

The user interface 108 is configured to receive input from a user, such as a pilot, and supply input data to the processing system 110. The processing system 110 is configured, in response to the input data, to implement various functions, some of which are described further below. It will be appreciated that the user interface 108 may be variously implemented. For example, it may be implemented as a keyboard, a mouse, a trackball, or a touch screen display, just to name a few. When it is implemented as a touch screen display, it may be functionally implemented as an integration of the user interface 108 and the display device 106. In such instances, the processing system 110 may command and control the touch screen display to generate a variety of graphical user interface (GUI) objects or elements, for example, buttons, sliders, and the like, which are used to prompt a user to provide user input, and to activate respective functions and provide user feedback, responsive to received user input at the GUI element.

Before proceeding further, it is noted that the processing system 110 preferably includes at least one processor, a communication bus, and a computer readable storage device or media. The processor performs the computation and control functions of the processing system 110. The processor can be any custom made or commercially available processor, a central processing unit (CPU), a graphics processing unit (GPU), an auxiliary processor among several processors associated with the processing system 110, a semiconductor-based microprocessor (in the form of a microchip or chip set), any combination thereof, or generally any device for executing instructions. The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the processing system 110. The bus serves to transmit programs, data, status and other information or signals between the various components of the aircraft. The bus can be any suitable physical or logical means of connecting computer systems and components. This includes, but is not limited to, direct hard-wired connections, fiber optics, infrared, and wireless bus technologies.

The instructions may include one or more separate programs, each of which comprises an ordered listing of executable instructions for implementing logical functions. Although only one processing system 110 is depicted in FIG. 1, other embodiments may include any number of processing system 110 that communicate over any suitable communication medium or a combination of communication mediums and that cooperate to process various, perform logic, calculations, methods, and/or algorithms, and generate data. In various embodiments, the processing system 110 includes or cooperates with at least one firmware and software program (generally, computer-readable instructions that embody an algorithm) for carrying-out the various process tasks, calculations, and control/display functions described herein. During operation, the processing system 110 may be programmed with and execute at least one firmware or software program, for example, a program 112 that embodies one or more algorithms, to thereby perform the various process steps, tasks, calculations, and control/display functions described herein.

With the above in mind, it is seen that the processing system 110 is in operable communication with the AMM database 102, the airport chart database 104, display device 106, and the user interface 108. The processing system 110 is configured, at least in response to input data supplied from the user interface 108, to retrieve AMM data from the AMM database 102 and chart data from the airport chart database 104. The processing system 110 is additionally configured to command the display device to selectively render, on the avionic display 107, images representative of an airport moving map and/or a published airport chart. More specifically, when an aircraft is supplied with airport taxi guidance information for a specific airport from, for example, air traffic control, the aircraft pilot, via the user interface 108 (for example), may request, for the specific airport, AMM data from the AMM database 102 and chart data from the airport chart database 104. The processing system 110 may also, in response to user input data supplied from the user interface 108, generate a taxi path that corresponds to the received airport taxi guidance information. In some embodiments, however, the taxi path that corresponds to the received airport taxi guidance information may be remotely generated and transmitted to the aircraft. In such embodiments, and as FIG. 1 depicts, the system 100 may additionally include a suitable receiver 114 that is configured to receive a generated taxi path that corresponds to the received airport taxi guidance information.

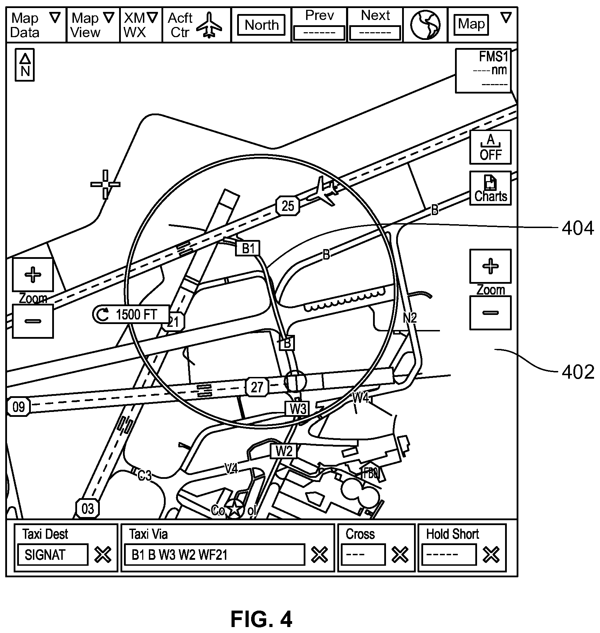

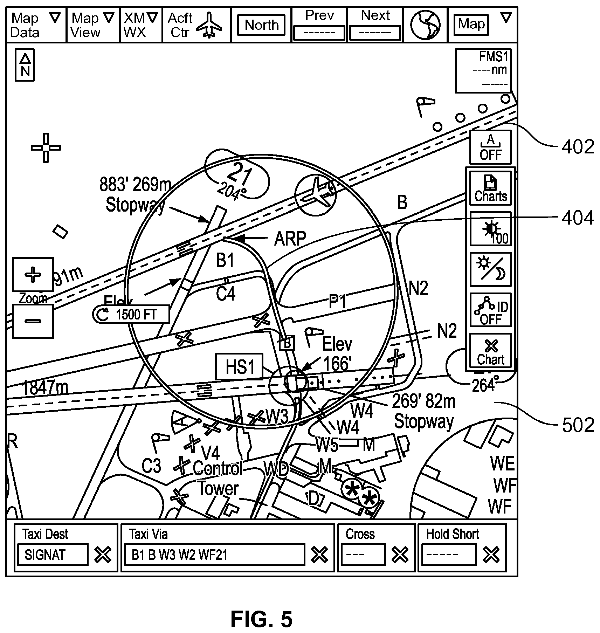

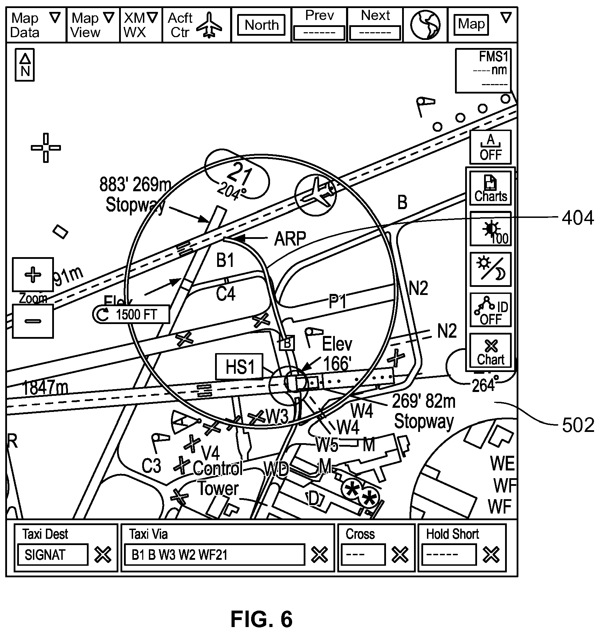

Regardless of where the taxi path is generated, and as seen in FIG. 4, the processing system 110 may additionally be configured, either automatically or in response to user input data supplied to the user interface 108, to command the display device 106 to render an image, on the avionic display 107, of the airport moving map 402 with the taxi path 404 overlaid onto the airport moving map 402. In addition, and as depicted in FIG. 5, the processing system 110 may additionally be configured, either automatically or in response to user input data supplied to the user interface 108, to command the display device 106 to render an image, on the avionic display 107, of the corresponding airport chart 502 overlaid (with selectable transparency via the user interface 108) onto the airport moving map 402 and with the taxi path 404 overlaid onto the airport chart 502. In this manner, the pilot can quickly and readily determine if the taxi path 404 can be implemented, based on the data that is reflected in the corresponding airport chart 502. If the pilot determines that there is sufficient disparity between taxi path 404 on the airport moving map 402 and on the corresponding airport chart 502, the pilot can select to disable, via the user interface 108, the airport moving map and correspondingly generated taxi path from being displayed. In such an instance, the processing system 110, in response to the disable command from the user interface 108, will also command the display device 106 to render the taxi path 404 overlaid only onto the corresponding airport chart 502, as shown in FIG. 6 but in a much subdued form to allow pilot to glance at the clearance information. When the pilot determines that the clearance display matches the airport chart information, the pilot can choose to proceed with the taxi operation using the clearance display within the airport chart displays.

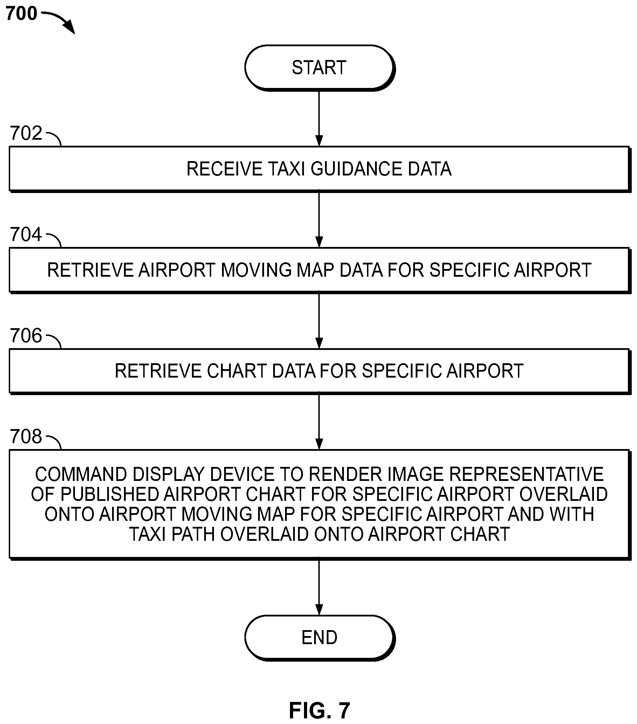

Having described the overall functionality of the system for displaying taxi guidance information 100, a description of a method for displaying taxi guidance information will now be described. The method 700, which is depicted in flowchart form in FIG. 7, represents various embodiments of a method for selectively automatically increasing the size of a seatbelt sign activation graphic. For illustrative purposes, the following description of method 700 may refer to elements mentioned above in connection with FIGS. 1-6. In practice, portions of method 700 may be performed by different components of the described system 100. It should be appreciated that method 700 may include any number of additional or alternative tasks, the tasks shown in FIG. 7 need not be performed in the illustrated order, and method 700 may be incorporated into a more comprehensive procedure or method having additional functionality not described in detail herein. Moreover, one or more of the tasks shown in FIG. 7 could be omitted from an embodiment of the method 700 if the intended overall functionality remains intact.

The method 700 starts and the processing system 110 receives taxi guidance data representative of taxi guidance information for a specific airport (702). The processing system 110 then retrieves airport moving map (AMM) data for the specific airport from the AMM data source 102 (704), and chart data for the specific airport from the airport chart data source (706). The processing system 110 then commands the display device 106 to render an image representative of a published airport chart for the specific airport overlaid onto an airport moving map for the specific airport and with a taxi path overlaid onto the airport chart for the specific airport (708).

The system and method described herein integrate the airport moving map and airport chart systems so that a pilot can quickly determine if the taxi path that is rendered on the airport moving map can be used for taxi operations, based on the data and information that is reflected in the corresponding airport chart.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in any appended claims.

## Claims

1. A system for displaying taxi guidance information on an airport chart, comprising:
a display device configured, in response to image rendering display commands, to render one or more images;
an airport moving map (AMM) data source configured to supply AMM data, the AMM data indicative of geometries of various airport features;
an airport chart data source configured to supply chart data indicative of airport charts;
a processing system in operable communication with the AMM data source, the airport chart data source, and the display device, the processing system adapted to receive taxi guidance data representative of taxi guidance information for a specific airport, the processing system configured, at least in response to an input command, to:
(i) retrieve AMM data for the specific airport from the AMM data source and chart data for the specific airport from the airport chart data source, and
(ii) command the display device to render an image representative of a published airport chart for the specific airport overlaid onto an airport moving map for the specific airport and with a taxi path that corresponds to the received airport taxi guidance information overlaid onto the airport chart for the specific airport.

2. The system of claim 1, wherein the input command is supplied via a user interface.

3. The system of claim 1, wherein the input command is generated and supplied automatically.

4. The system of claim 1, wherein the processing system is further configured, in response to a disable command, to command the display device to stop rendering the airport moving map for the specific airport and render the taxi path overlaid onto only the airport chart for the specific airport.

5. The system of claim 1, wherein the published airport chart for the specific airport is overlaid onto the airport moving map for the specific airport with a selected transparency.

6. The system of claim 5, further comprising:
a user interface configured to receive input from a user and configured, in response thereto, to supply a transparency command indicative of the selected transparency,
wherein the processing system is coupled to receive the transparency command and is configured, upon receipt thereof, to command the display device to overlay the published airport chart for the specific airport onto the airport moving map for the specific airport with the selected transparency.

7. A method for displaying taxi guidance information, comprising the steps of:
receiving, in a processing system, taxi guidance data representative of taxi guidance information for a specific airport;
retrieving, via the processing system, airport moving map (AMM) data for the specific airport from an AMM data source,
retrieving, via the processing system, chart data for the specific airport from an airport chart data source;
commanding a display device, via the processing system, to render an image representative of a published airport chart for the specific airport overlaid onto an airport moving map for the specific airport and with a taxi path that corresponds to the received airport taxi guidance information overlaid onto the airport chart for the specific airport.

8. The method of claim 7, wherein the processing system commands the display device in response to an input command supplied via a user interface.

9. The method of claim 7, wherein the processing system automatically commands the display device.

10. The method of claim 7, further comprising:
supplying a disable command to the processing system; and
in response to the disable command, commanding the display device, via the processing system, to stop rendering the airport moving map for the specific airport and render the taxi path overlaid onto only the airport chart for the specific airport.

11. The method of claim 7, wherein the published airport chart for the specific airport is overlaid onto the airport moving map for the specific airport with a selected transparency.

12. The method of claim 11, further comprising:
supplying, via a user interface, a transparency command indicative of the selected transparency; and
commanding, via the processing system, the display device to overlay the published airport chart for the specific airport onto the airport moving map for the specific airport with the selected transparency.
